# EUROPÄISCHE PATENTSCHRIFT

(11) **EP 1 182 105 B1**
(45) Veröffentlichungstag und Bekanntmachung des Hinweises auf die Patenterteilung: **09.08.2006**
(21) Anmeldenummer: 01114201.5
(22) Anmeldetag: 12.06.2001
(51) Int. Cl.: B60S 1/08

(54) **Regensensor, insbesondere für ein Kraftfahrzeug**
Rain sensor, in particular for a vehicle
Capteur de pluie, en particulier pour un véhicule

(30) Priorität: 25.08.2000 DE 10041776
(43) Veröffentlichungstag der Anmeldung: 27.02.2002
(73) Patentinhaber: ROBERT BOSCH GMBH, 70442 Stuttgart (DE)
(72) Erfinder: Neubauer, Achim, 76547 Sinzheim-Vormberg (DE); Bolz, Martin-Peter, 77815 Bühl (DE); Krüger, Hartmut, 77830 Bühlertal (DE); Mönch, Jochen, 76547 Sinzheim (DE)

(56) Entgegenhaltungen:
- WO-A-99/23828
- DE-A- 3 205 771
- DE-A- 19 545 604
- DE-A- 19 646 078
- DE-A- 19 839 273
- DE-U- 29 806 638
- PATENT ABSTRACTS OF JAPAN vol. 1996, no. 02, 29. Februar 1996 (1996-02-29) -& JP 07 280925 A (NISSAN MOTOR CO LTD), 27. Oktober 1995 (1995-10-27)
- PATENT ABSTRACTS OF JAPAN vol. 017, no. 129 (P-1503), 18. März 1993 (1993-03-18) -& JP 04 309883 A (FUJITSU TEN LTD), 2. November 1992 (1992-11-02)

## Beschreibung

### Stand der Technik

Die Erfindung betrifft einen Regensensor insbesondere für ein Kraftfahrzeug nach Gattung des unabhängigen Anspruchs. Es sind schon zahlreiche Regensensoren, beispielsweise aus der DE 40 19 066 A1 bekannt, welche nach optoelektronischen Prinzipien funktionieren und an Frontscheiben von Kraftfahrzeugen zur Steuerung einer Wischvorrichtung angeordnet sind. Weiters ist aus der DE 195 45 604 A1 bekannt, einen solchen Regensensor innerhalb einer Bremsleuchte im Bereich der Heckscheibe anzuordnen.

Regensensoren dieser Bauart sind jedoch relativ teuer, was bisher einen Einsatz an der weniger sicherheitsrelevanten Heckscheibe verhindert hat. Aus der DE-A-198 39 273 ist ein Regensensor mit den Merkmalen des Oberbegriffs des Anspruchs 1 bekannt.

### Vorteile der Erfindung

Der erfindungsgemäße Regensensor mit den Merkmalen des Hauptanspruchs hat den Vorteil, dass die Sender des Regensensors gleichzeitig als Fahrzustandsanzeige eines Kraftfahrzeuges dienen. Durch diese Mehrfachverwendung werden Kosten eingespart, der Bauraum begrenzt und eine praktikable Regensensorvorrichtung zur Steuerung einer Wischvorrichtung für die Heckscheibe eines Kraftfahrzeuges zur Verfügung gestellt.

Durch die in den Unteransprüchen aufgeführten Maßnahmen ergeben sich vorteilhafte Weiterbildungen und Verbesserungen der im Hauptanspruch angegebenen Merkmale.

Als ein weiterer Vorteil ist anzusehen, wenn die Sender als Leuchtdioden ausgebildet sind, welche kostengünstig in großen Stückzahlen verfügbar sind und darüber hinaus häufig als Bremsleuchte im Kraftfahrzeug Anwendung finden.

Sind die Sender zur Detektion von Niederschlag in einem Pulsbetrieb ansteuerbar, so wird der Energieverbrauch des Regensensors minimiert. Weiterhin können dadurch vorteilhafterweise frequenzselektive Signalaufbereitungsverfahren angewendet werden oder auch in den Dunkelphasen Störlichtmessungen vorgenommen werden.

Um ein kontinuierliches Blinken der Sender zu verhindern, ist es vorteilhaft, die Sendepulse des Pulsbetriebs kürzer als die menschliche Wahrnehmungsschwelle andauern zu lassen. Diese Schwelle liegt etwa bei 0,1 Sekunde.

Ist der Regensensor an einer Heckscheibe des Kraftfahrzeugs angeordnet und der Sender als Bremsleuchte ausgebildet, ist eine kostengünstige Möglichkeit gegeben, die bei vielen Fahrzeugen heute übliche dritte Bremsleuchte multifunktional einzusetzen.

Sind Sender und Empfänger derart angeordnet, dass Licht von der innen liegenden Seite der Heckscheibe des Kraftfahrzeugs zur außen liegenden Glasgrenzfläche der Heckscheibe gelangt, dort zumindest partiell reflektiert wird und auf der innen liegenden Seite der Heckscheibe anschließend detektiert wird, so wird ein bei Regensensoren übliches und erprobtes Verfahren verwandt.

Sind darüber hinaus lichtführende Elemente vorgesehen, welche auf der Heckscheibe des Kraftfahrzeugs befestigbar sind, können auch bestimmte vorteilhafte Strahlengänge innerhalb der Scheibe, beispielsweise Mehrfachreflexionen erreicht werden. Dies gilt insbesondere dann, wenn die lichtführenden Elemente, beispielsweise spiegel- oder linsenartige Objekte, optisch direkt an die Heckscheibe ankoppelbar sind.

Weiter ist es vorteilhaft, wenn eine Auswerteelektronik vorgesehen ist und Sender, Empfänger und Auswerteelektronik auf einer einzigen Platine angeordnet sind. Auf diese Weise kann eine solche Bremsleuchten-Regensensor-Kombination in jeweils einem Arbeitsgang bestückt und in ein Kraftfahrzeug eingebaut werden.

Besonders vorteilhaft ist es, wenn die Auswerteelektronik zur Umgebungslichtfilterung eine frequenzselektive Signalaufbereitung, beispielsweise eine Lock-In-Technik durchführt. Hierbei wird der Fachmann die Pulsfrequenz der Sender als Leitfrequenz wählen. Von besonderem Vorteil ist es dabei, wenn die Pulsfrequenz nicht ohne Rest durch 100 teilbar ist, um beispielsweise Interferenzen mit Tunnelbeleuchtungen oder ähnlichem zu vermeiden.

Weiter ergibt sich ein Vorteil, wenn mehrere Sender und mehrere Empfänger vorgesehen sind, um einen größeren Bereich der Heckscheibe zur Niederschlagserfassung verwenden zu können. Dies ist insbesondere dann vorteilhaft, wenn die Sender als Dioden-Array angeordnet sind. Darüber hinaus, ergibt dies auch eine hohe Strahlungsintensität, was eine hohe Signalwirkung für nachfolgende weitere Kraftfahrzeuge bewirkt.

### Zeichnung

Ein Ausführungsbeispiel der Erfindung ist in den Zeichnungen dargestellt und in der nachfolgenden Beschreibung näher erläutert.
Es zeigen:
Figur 1 einen Längsschnitt durch einen erfindungsgemäßen Regensensor in schematischer Darstellung,
Figur 2 eine Draufsicht auf eine Heckscheibe eines Kraftfahrzeuges mit einer erfindungsgemäßen Regensensorvorrichtung und
Figur 3 einen schematischen Intensitätsverlauf an den Leuchtdioden.

### Beschreibung des Ausführungsbeispiels

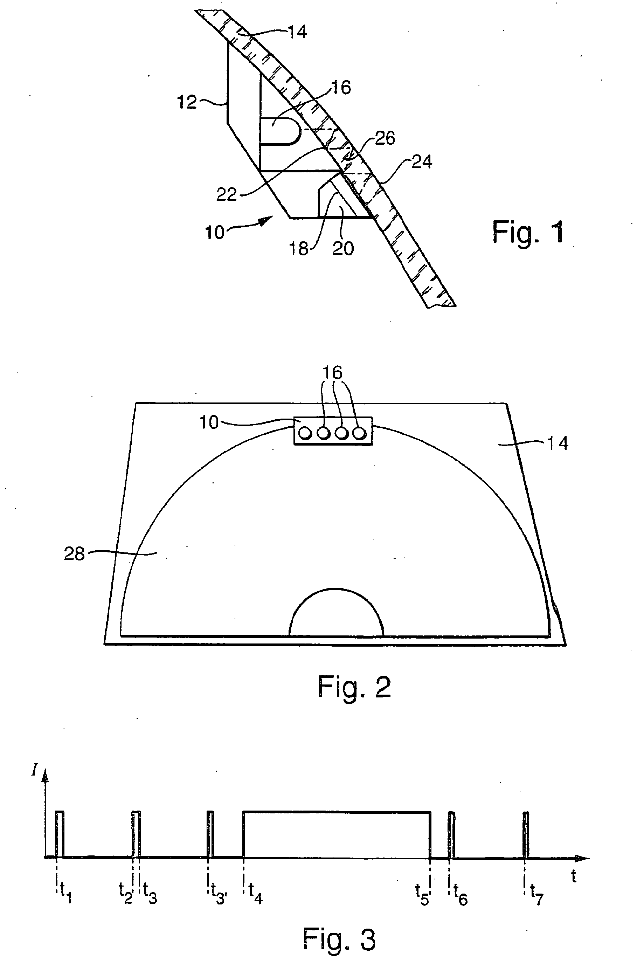

In Figur 1 ist ein erfindungsgemäßer Regensensor 10 dargestellt. Dieser befindet sich in einem Gehäuse 12, welches zu einer Heckscheibe 14 eines Kraftfahrzeugs hin geöffnet ist. Innerhalb des Gehäuses sind Leuchtdioden als Sender 16 sowie ein lichtempfindliches Element als Empfänger 18 angeordnet. Weiterhin ist in dem Gehäuse eine Auswerteelektronik 20 angeordnet, welche im Einbauzustand mit einer Zentralelektronik des Kraftfahrzeuges oder direkt mit einer nicht dargestellten Wischanlage für die Heckscheibe 14 verbunden ist. Die Heckscheibe 14 ist auf ihrer dem Regensensor 10 zugewandten Seite partiell mit einer Verspiegelung als lichtführendes Element 22 versehen.

Im Betrieb gelangt Licht vom Sender 16 in die Heckscheibe 14. Ist diese frei von Schmutz und Niederschlägen, so wird es an der außen liegenden Glasgrenzfläche 24 nach innen hin reflektiert, dort am Spiegel 22 wieder in Richtung der Glasgrenzfläche 24 reflektiert, an der Glasgrenzfläche 24 wiederum total reflektiert und in den Empfänger 18 zurückgeleitet. Auf diese Weise entsteht eine Messstrecke 26, innerhalb der das Licht mehrfach zwischen dem Spiegel als lichtführendem Element 22 und der außen liegenden Glasgrenzfläche 24 hin und her reflektiert wird.

Figur 2 zeigt die Außenseite der Heckscheibe 14 in einer Draufsicht wie sie ein Fahrer eines dem Kraftfahrzeug folgenden weiteren Kraftfahrzeugs wahrnimmt. Innerhalb eines, von einem Wischer überstreichbaren Wischbereichs 28 ist der Regensensor 10 mit seinen Sendern 16 angeordnet. Die Leuchtdioden der Sender 16 sind so angeordnet, dass sie von einem nachfolgenden Kraftfahrzeug aus gut sichtbar sind. Zur Verwendung des Regensensors 10 als "dritte Bremsleuchte" des Kraftfahrzeugs, ist der Regensensor mittig im oberen Bereich der Heckscheibe 24 angeordnet, und zwar so, dass die Sensorfläche einerseits von an der Scheibe befindlichen Reinigungsmitteln, wie beispielsweise einem Wischer gereinigt wird, trotzdem aber für ein nachfolgendes Fahrzeug gut zu erkennen ist. Typischerweise sind die Leuchtioden als Sender 16 in Form eines Diodenarrays mit beispielsweise 30 Leuchtdioden in 3 Reihen ausgebildet um eine gute Sichtbarkeit zu gewährleisten. Natürlich müssen nicht alle Leuchtdioden als Sender 16 für den Regensensor dienen. Denkbar ist beispielsweise 2 oder 3 Leuchtdioden als Sender 16 zu verwenden und weiteren Leuchtdioden nur zur Signalisierung des Fahrzeugstands heranzuziehen.

Figur 3 zeigt einen typischen Signalverlauf der Senderintensität über der Zeit. Zu den Zeitpunkten t1, t2, t3', t6 und t7 werden die Leuchtdioden 16 für einen kurzen Puls eingeschaltet. Dieser Puls, beispielsweise zwischen t2 und t3, beträgt weniger als 0,1 Sekunde. Damit ist dieser mittels des menschlichen Auges nicht wahrnehmbar. Etwa alle 500 Millisekunden wiederholt sich dieser Puls, woraus folgt, daß alle 500 Millisekunden eine Niederschlagsmessung vorgenommen wird.

Zum Zeitpunkt t4 wird vom Kraftfahrzeugführer ein Bremsvorgang ausgeführt, welche bis zum Zeitpunkt t5 andauert. Während dieser Zeitspanne t4 bis t5 werden keine Messungen durchgeführt. Erst zum Zeitpunkt t6 wird wieder mit neuen Messzyklen begonnen. Natürlich kann zwischen t4 und t5, also während des Bremsvorganges, bei dem die Senderdioden aktiv geschaltet sind, eine Messung vorgenommen werden, jedoch ist dann keine frequenzselektive Signalaufbereitung durchführbar.

Eine weitere Möglichkeit ist es, während der Taktpause zwischen t3 und t3' eine Umgebungslichtmessung durchzuführen und die Informationen dieser Messung zur Signalaufbereitung zu verwenden.

In einer Variation der Erfindung kann das Gehäuse 12 selbst als Leiterbahnträger für die Auswerteelektronik 20 dienen. Denkbar ist auch, in das Gehäuse 12 noch weitere Komponenten, beispielsweise eine Funkantenne, einen Abstandssensor oder einen Helligkeitssensor zu integrieren, um Fahrzeuge oder Gegenstände in verschiedenen rückwärtigen Richtungen des Kraftfahrzeugs zu detektieren.

## Patentansprüche

1. Regensensor (10), insbesondere für ein Kraftfahrzeug, mit mindestens einem Sender (16) und mindestens einem, für das Frequenzspektrum des Senders (16) wenigstens partiell empfindlichen Empfänger (18), wobei das von Sender (16) ausgesandte Licht zur Detektion von Regen an der außen liegenden Glasgrenzfläche einer Heckscheibe dort zumindest partiell nach innen hin reflektiert und in den Empfänger (18) zurückgeleitet wird, **dadurch gekennzeichnet, dass** der Sender (16) derart angesteuert ist, dass dieser als Fahrzustandsanzeige, insbesondere für weitere, nachfolgende Kraftfahrzeuge, dient.

2. Regensensor (10) nach Anspruch 1, **dadurch gekennzeichnet, daß** der mindestens eine Sender (16) als Leuchtdiode ausgebildet ist.

3. Regensensor (10) nach einem der vorhergehenden Ansprüche, **dadurch gekennzeichnet, daß** der mindestens eine Sender (16) zur Detektion von Niederschlag in einem Pulsbetrieb ansteuerbar ist.

4. Regensensor (10) nach Anspruch 3, **dadurch gekennzeichnet, daß** die Sendepulse des Pulsbetriebs kürzer als die menschliche Wahrnehmungsschwelle sind.

5. Regensensor (10) nach einem der vorhergehenden Ansprüche, **dadurch gekennzeichnet, daß** der mindestens eine Sender 16 an der Heckscheibe (14) des Kraftfahrzeugs anordenbar ist und als Bremsleuchte dient.

6. Regensensor (10) nach Anspruch 5, **dadurch gekennzeichnet, daß** lichtführende Elemente (22) vorgesehen sind, die auf der Heckscheibe (14) befestigbar, insbesondere optisch ankoppelbar sind.

7. Regensensor (10) nach Anspruch 3, **dadurch gekennzeichnet, daß** eine Auswerteelektronik (20) vorgesehen ist, daß Sender (16), Empfänger (18) und Auswerteelektronik (20) auf einer einzigen Platine angeordnet sind.

8. Regensensor (10) nach Anspruch 7, **dadurch gekennzeichnet, daß** für die Auswerteelektronik (20) zur Umgebungslichtfilterung eine frequenzselektive Signalaufbereitung durchführbar ist, wobei die Pulsfrequenz Leitfrequenz ist.

9. Regensensor (10) nach einem der vorhergehenden Ansprüche, **dadurch gekennzeichnet, daß** mehrere Sender (16) und/oder mehrere Empfänger (18) vorgesehen sind und daß die Sender (16) als Diodenarray angeordnet sind.

## Claims

1. Rain sensor (10), in particular for a motor vehicle, having at least one transmitter (16) and at least one receiver (18) which is at least partially sensitive to the frequency spectrum of the transmitter (16), with the light for detecting rain which is emitted by the transmitter (16) being reflected at least partially inwards at the outer glass boundary surface of a rear windscreen and being returned to the receiver (18), **characterized in that** the transmitter (16) is driven in such a way that it serves as a vehicle-state display, in particular for further, following motor vehicles.

2. Rain sensor (10) according to Claim 1, **characterized in that** the at least one transmitter (16) is in the form of a light-emitting diode.

3. Rain sensor (10) according to one of the preceding claims, **characterized in that** the at least one transmitter (16) can be driven in a pulsed mode in order to detect precipitation.

4. Rain sensor (10) according to Claim 3, **characterized in that** the transmission pulses of the pulsed mode are shorter than the human perception threshold.

5. Rain sensor (10) according to one of the preceding claims, **characterized in that** the at least one transmitter (16) can be arranged on the rear windscreen (14) of the motor vehicle and serves as a brake light.

6. Rain sensor (10) according to Claim 5, **characterized in that** light-guiding elements (22) are provided which can be mounted on, in particular optically coupled to, the rear windscreen (14).

7. Rain sensor (10) according to Claim 3, **characterized in that** evaluation electronics (20) are provided, **in that** the transmitter (16), receiver (18) and evaluation electronics (20) are arranged on a single printed circuit board.

8. Rain sensor (10) according to Claim 7, **characterized in that** frequency-selective signal conditioning can be carried out for the evaluation electronics (20) in order to filter ambient light, with the pulse frequency being the control frequency.

9. Rain sensor (10) according to one of the preceding claims, **characterized in that** a plurality of transmitters (16) and/or a plurality of receivers (18) are provided, and **in that** the transmitters (16) are arranged in the form of a diode array.

## Revendications

1. Capteur de pluie (10), notamment pour un véhicule, comportant au moins un émetteur (16) et au moins un récepteur (10) au moins partiellement sensible au spectre de fréquence de l'émetteur (16),
la lumière émise par l'émetteur (16) étant réfléchie par la surface limite extérieure du verre d'une lunette arrière, au moins partiellement vers l'intérieur jusque dans le récepteur (18) pour détecter la pluie,
**caractérisé en ce que**
l'émetteur (14) est commandé pour assurer également l'affichage d'état du véhicule, notamment pour d'autres véhicules suiveurs.

2. Capteur de pluie (10) selon la revendication 1,
**caractérisé en ce qu'**
au moins un émetteur (16) est réalisé sous la forme d'une diode photo-lumineuse.

3. Capteur de pluie (10) selon l'une des revendications précédentes,
**caractérisé en ce qu'**
au moins un émetteur (16) est commandé en mode impulsionnel pour détecter une précipitation.

4. Capteur de pluie (10) selon la revendication 3,
**caractérisé en ce que**
les impulsions d'émission du mode impulsionnel sont plus courtes que le seuil de perception de l'oeil humain.

5. Capteur de pluie (10) selon l'une des revendications précédentes,
**caractérisé en ce qu'**
au moins un émetteur (16) est installé sur la lunette arrière (14) du véhicule et sert de feu de frein.

6. Capteur de pluie (10) selon la revendication 5,
**caractérisé par**
des éléments de guide de lumière qui se fixent sur la lunette arrière (14) et sont notamment couplés optiquement.

7. Capteur de pluie (10) selon la revendication 3,
**caractérisé par**
une électronique d'exploitation (20), l'émetteur (16), le récepteur (18) ainsi que l'électronique d'exploitation (20) sont installés sur une seule platine.

8. Capteur de pluie (10) selon la revendication 7,
**caractérisé en ce que**
l'électronique d'exploitation (20) effectue une préparation du signal de manière sélective en fréquence pour filtrer la lumière ambiante, la fréquence impulsionnelle étant la fréquence guide.

9. Capteur de pluie (10) selon l'une des revendications précédentes,
**caractérisé par**
plusieurs émetteurs (16) et/ou plusieurs récepteurs (18) et les émetteurs (16) sont disposés sous la forme d'un réseau de diodes.
